(19) Europäisches Patentamt / European Patent Office / Office européen des brevets

(11) **EP 4 102 405 A1**

(12) **EUROPEAN PATENT APPLICATION**

(43) Date of publication:
**14.12.2022 Bulletin 2022/50**

(21) Application number: **21305799.5**

(22) Date of filing: **10.06.2021**

(51) International Patent Classification (IPC):
*G06N 3/00* (2006.01)        *G06N 7/00* (2006.01)
*G06N 3/08* (2006.01)        *G06N 3/04* (2006.01)
*B25J 9/16* (2006.01)

(52) Cooperative Patent Classification (CPC):
**G06N 3/006; B25J 9/161; G06N 3/0454;**
**G06N 3/084; G06N 7/005**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Naver Corporation**
  **Seongnam-si, Gyeonggi-do 13561 (KR)**
• **Naver Labs Corporation**
  **Seongnam-si, Gyeonggi-do 13638 (KR)**

(72) Inventors:
• **CACHET, Theo**
  **38000 Grenoble (FR)**
• **PEREZ, Julien**
  **38000 Grenoble (FR)**
• **DANCE, Christopher**
  **38000 Grenoble (FR)**

(74) Representative: **Grünecker Patent- und**
**Rechtsanwälte**
**PartG mbB**
**Leopoldstraße 4**
**80802 München (DE)**

(54) **DEMONSTRATION-CONDITIONED REINFORCEMENT LEARNING FOR FEW-SHOT IMITATION**

(57) A computer-implemented method for performing few-shot imitation is disclosed. The method comprises obtaining at least one set of training data, wherein each set of training data is associated with a task and comprises (i) one of samples of rewards and a reward function, (ii) one of samples of state transitions and a transition distribution, and (iii) a set of first demonstrations, training a policy network of an agent using reinforcement learning by inputting at least one set of first demonstrations of the at least one set of training data into the policy network, and by maximizing a risk measure or an average return over the at least one set of first demonstrations of the at least one set of training data based on respective one or more reward functions or respective samples of rewards, obtaining a set of second demonstrations associated with a new task, and inputting the set of second demonstrations and an observation of a state into the trained policy network for performing the new task.

$$e = \Phi(\mathbf{d}) \in \mathcal{E} \qquad a_t \in \mathcal{A} \qquad V_t \in \mathbb{R}$$

Average pooling

MLP policy head    MLP value head

$L \times$   Cross-demonstration encoder layer

Temporal encoder layer

Temporal decoder layer

2D positional encoding    1D positional encoding

Input embedding    Input embedding

$$\mathbf{d} := (d_0, \ldots, d_{n-1}) \sim \mathcal{D}_\mu \qquad h_t \in \mathcal{H}$$

**FIG. 3B**

EP 4 102 405 A1

## Description

## Technical Field

The present disclosure relates to few-shot imitation. In particular, the present disclosure relates to a policy network for a few-shot imitation agent.

## Background

Humans owe their success to their uniquely developed ability to learn from others, a core component of which is the capacity to imitate. While humans often only need a few demonstrations to learn to perform a task, state-of-the-art imitation learning methods often require prohibitively many demonstrations even to learn simple tasks. This has motivated the study of few-shot imitation, in which the aim is to maximize the expected performance of an agent that must complete a previously unseen task, having only seen a few demonstrations of that task. For instance, a person might demonstrate how to close a specific window and then expect a robot to close that window, even though the robot has never been trained on this task before, and even though the window's initial state may not be the same as it was in the demonstration.

Few-shot imitation is motivated by the desire to enable artificial agents to perform a diverse range of tasks, and the hope that a single few-shot imitation agent, trained on a representative set of tasks, can build a representation that enables it to generalize to large numbers of new tasks with acceptable numbers of demonstrations. Existing few-shot imitation algorithms either use behavior cloning (BC), in which the agent is trained to minimize an action-prediction loss (Finn, C., Yu, T., Zhang, T., Abbeel, P., and Levine, S.: One-shot visual imitation learning via meta-learning, arXiv preprint arXiv: 1709.04905, 2017), or they use inverse reinforcement learning (IRL) to infer a reward function from the demonstrations (Goo, W. and Niekum, S.: One-shot learning of multistep tasks from observation via activity localization in auxiliary video. In International Conference on Robotics and Automation, ICRA, pp. 7755-7761, 2019) and then train a policy for that reward function. Unfortunately, these existing algorithms suffer from one or more of the following limitations. They assume actions are part of the demonstration or that different tasks share a common transition distribution. Further, they ignore domain shift between the agent and the demonstrator, they cannot improve upon suboptimal demonstrators, or they must train a policy each time they are presented with demonstrations of a new task. All of these limitations are practically important to address, for instance for robots inferring policies from human demonstrations.

Accordingly, there is a need to address the problem of inefficient and underperforming few-shot imitation agents and the training thereof.

## Summary

To address the challenges in the state of the art, novel methods and agents for performing few-shot imitation are disclosed.

In an embodiment, a computer-implemented method comprises obtaining at least one set of training data. Each set of training data is associated with a task, such as a known task for training a policy network, and comprises at least one of samples of rewards and a reward function, and at least one of samples of state transitions and a transition distribution. The computer-implemented method comprises training a policy network of an agent using reinforcement learning by inputting at least one set of first demonstrations of the at least one set of training data into the policy network and by maximizing a risk measure, such as the conditional value-at-risk (CVaR) using so-called "distributional RL", or an average return over the at least one set of first demonstrations of the at least one set of training data based on respective one or more reward functions or respective samples of rewards, obtaining a set of second demonstrations associated with a new task, and inputting the set of second demonstrations and an observation of a state of the agent into the trained policy network for performing the new task. The samples of rewards and/or the samples of state transitions may be obtained from a simulation, or from "offline data", which may be data collected from a real system, prior to the training.

By training a policy network of an agent and by inputting a set of second demonstrations and an observation of a state in the trained policy network for performing a new task, an improved method for efficiently performing few-shot imitation is provided.

According to aspects, the policy network comprises at least one of a first self-attention mechanism for processing the set of second demonstrations, a second self-attention mechanism for processing the observation of the state, and a cross-attention mechanism for processing the set of second demonstrations and the observation of the state. For example, the policy network comprises a transformer-based policy network. The transformer-based policy network may comprise at least one transformer with axial attention. The inputted at least one set of first demonstrations may be encoded as a first multi-dimensional tensor, and attention of a first transformer of the at least one transformer may be applied along a single axis of the first multi-dimensional tensor, e.g. without flattening. Alternatively or additionally, the inputted set of second demonstrations may be encoded as a second multi-dimensional tensor, and attention of a second transformer of the at least one transformer may be applied along a single axis of the second multi-dimensional tensor. By using transformers with axial attention, an efficient method for training the policy network is provided. Specifically, transformers with axial attention efficiently process multiple input demonstrations, videos of a single demonstration or any other multi-dimensional input.

In all embodiments, self-attention and cross-attention mechanisms other than transformers can be used instead of transformers or transformer networks for the same purpose. In embodiments, self-attention and cross-attention mechanisms other than transformers are used instead of transformers, e.g. a self-attention mechanism may be used for processing a set of demonstrations and/or an observation, and a cross-attention mechanism may be used for processing a set of demonstrations and an observation.

In aspects, the steps of obtaining a set of second demonstrations associated with a new task, and inputting the set of second demonstrations and an observation of a state into the trained policy network for performing the new task are performed at inference time or at runtime of the agent. The steps of obtaining at least one set of training data, and training a policy network using reinforcement learning may be performed during training time.

In aspects, the step of inputting the at least one set of first demonstrations of the at least one set of training data into the policy network for training the policy network comprises inputting at least one of a state of the agent, a state-action pair, an observation history and an observation-action history into the policy network for training the policy network. The at least one set of first demonstrations of the at least one set of training data may comprise demonstrations of at least two tasks, and the average return may be maximized over the at least one set of first demonstrations of the at least one set of training data by maximizing an average cumulative reward over the at least two tasks. By using training data associated with a plurality of tasks, the policy network provides improved results for performing new tasks, due to a better generalization of the policy network.

The method may further comprise obtaining or determining, by the trained policy network, a distribution of one or more actions based on the observation of the state and the set of second demonstrations. The new task and at least one task associated with the at least one set of training data may be related, e.g. an optimal policy for the new task may be similar to an optimal policy for the at least one task. The new task and at least one task associated with at least one set of training data may be different, or the new task and all tasks associated with at least one set of training data may be different.

In an embodiment, an agent comprises a pre-trained policy network for performing at least one task. The agent is configured to obtain a set of first demonstrations and an observation as input for the pre-trained policy network, input the set of first demonstrations and the observation into the pre-trained policy network for performing a task associated with the first demonstrations, and determine, by the pre-trained policy network, at least one action to be performed based on the inputted set of first demonstrations and the inputted observation. A pre-trained policy network may be trained using reinforcement learning. For example, The pre-trained policy network may comprise a demonstration-conditioned policy network trained with reinforcement learning on a set of training tasks using a set of training demonstrations for each training task of the set of training tasks.

The pre-trained policy network may comprise at least one of a first self-attention mechanism for processing the set of first demonstrations, a second self-attention mechanism for the observation and a cross-attention mechanism for processing the set of first demonstrations and the observation. For example, the pre-trained policy network may comprise a pre-trained transformer-based policy network. The pre-trained transformer-based policy network may comprise at least one transformer with axial attention. A demonstration of the set of first demonstrations may be a sequence of observations of a random length. The observation may comprise at least one of a state-action pair, a state, a position, an image and a sensor measurement. The set of first demonstrations is provided by a demonstrator.

In an embodiment, a robot comprises the agent comprising the pre-trained policy network for performing at least one task, wherein the task comprises a manipulation task for manipulating an object, and wherein the observation comprises information about the robot or one or more parts of the robot, wherein the set of first demonstrations comprise a sequence of positions and/or orientations of the robot or the one or more parts of the robot, and wherein at least one actuator or motor of the robot is controlled based on the determined action to be performed to modify a state of an environment. A manipulation task may be defined as the task of modifying, by using a robot, in a purposeful manner the state of an environment composed of objects while respecting constraints related to the environment and the mechanical properties of the robot.

In an embodiment, a robot comprises the agent comprising the pre-trained policy network for performing at least one task. The task may comprise a navigation task for navigating the robot or a part of the robot. The observation may comprise a position of the robot or the part of the robot. The set of first demonstrations may comprise a sequence of positions of the robot or the part of the robot. At least one actuator or motor of the robot may be controlled based on the determined action to be performed. By providing a robot comprising the agent comprising the pre-trained policy network for performing a navigation task, an improved robot is achieved that allows for mapless or trajectory-based navigation based on positional or visual observations.

In a further embodiment, a computer-readable storage medium having computer-executable instructions stored thereon is provided. When executed by one or more processors, the computer-executable instructions perform the method for performing few-shot imitation described above.

In a further embodiment, an apparatus comprising processing circuitry is provided. The processing circuitry is configured to execute the agent described above.

The following detailed description and accompanying drawings provide a more detailed understanding of the nature and advantages of the present invention.

**Brief Description of the Figures**

The accompanying drawings are incorporated into and form a part of the specification for the purpose of explaining the principles of the embodiments. The drawings are not to be construed as limiting the embodiments to only the illustrated and described embodiments of how they can be made and used. Further features and advantages will become apparent from the following and more particularly from the description of the embodiments, as illustrated in the accompanying drawings, wherein:

**Figure 1** illustrates a process flow diagram of a method for performing few-shot imitation in accordance with at least one embodiment,

**Figure 2** illustrates a process flow diagram of a method for training a policy network in accordance with at least one embodiment,

**Figure 3A** illustrates a process flow diagram of a method for training a policy network according to an embodiment,

**Figure 3B** illustrates an example architecture of a policy network in accordance with embodiments,

**Figure 4** illustrates three examples of navigation tasks performed by an agent in accordance with embodiments, and

**Figure 5** illustrates an example architecture in which the disclosed methods may be performed.

**Detailed Description**

Described herein are systems and methods for performing few-shot imitation. For purposes of explanation, numerous examples and specific details are set forth in order to provide a thorough understanding of the described embodiments. Embodiments as defined by the claims may include some or all of the features in these examples alone or in combination with other features described below, and may further include modifications and equivalents of the features and concepts described herein. The illustrative embodiments will be described with reference to the drawings wherein elements and structures are indicated by reference numbers. Further, where an embodiment is a method, steps, and elements of the method may be combinable in parallel or sequential execution. As far as they are not contradictory, all embodiments described below can be combined with each other.

Imitation learning is not a necessary component of few-shot imitation. While the two existing approaches to few-shot imitation (BC and IRL) are also the main approaches to single-task imitation learning, a novel approach is disclosed. This approach will be called demonstration-conditioned reinforcement learning (DCRL).

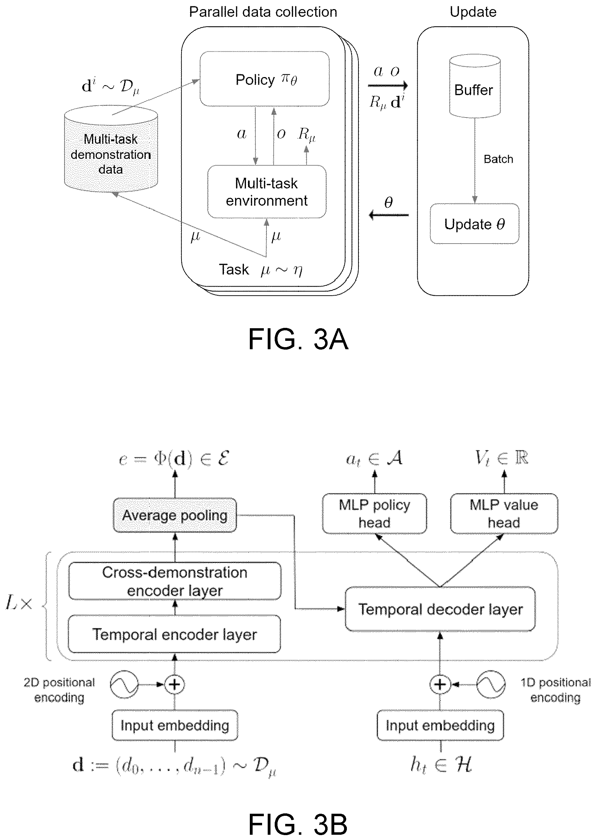

In DCRL, a training set may consist of demonstrations, one of samples of rewards and reward functions, and one of samples of state transitions and a transition distribution for multiple tasks, as shown in Figure 3A. Policies or policy networks may take demonstrations as input (in addition to an agent's state or observation-action history). To train such a policy or policy network an average cumulative reward may be maximized over a set of training tasks. At inference time, demonstrations of a new task may be fed into the trained policy, along with observations of the state, and actions may be output by the trained policy. Demonstrations serve to inform the agent about the task's objective, they serve as examples of how to perform the task, and they may also be informative about the transition distribution if this differs from one task to another. However, DCRL could also be directly applied in situations with a different relationship between demonstrations and tasks, such as avoidance learning.

DCRL has several advantages over existing approaches. With no special modifications to the basic algorithm, it accepts demonstrations that consist of state-only observations, it can address situations with a domain shift between the demonstrator and the agent, it can improve upon suboptimal demonstrations, and/or it requires no additional training when presented with demonstrations of a new task.

As a single demonstration may not be enough to impart the objective of a new task, cross-demonstration attention over multiple input demonstrations can be used. While previous work on few-shot imitation has explored policies that use transformers, the computational cost of such architectures is prohibitive for inputs consisting of multiple demonstrations, each of which is a multivariate time series. Therefore, transformers with axial attention, which provide a more efficient alternative architecture for such inputs, may be used as they attend to the temporal and demonstration dimensions of the input independently.

DCRL provides a new approach to learning agents for few-shot imitation. Cross-demonstration attention, enabled by transformers with axial attention, which have not previously been considered as components of policy architectures may be used. Results on robotic manipulation and navigation benchmarks, demonstrating DCRL's superior performance compared with state-of-the-art alternatives, as well as its ability to improve on suboptimal demonstrations and to cope with domain shifts are presented.

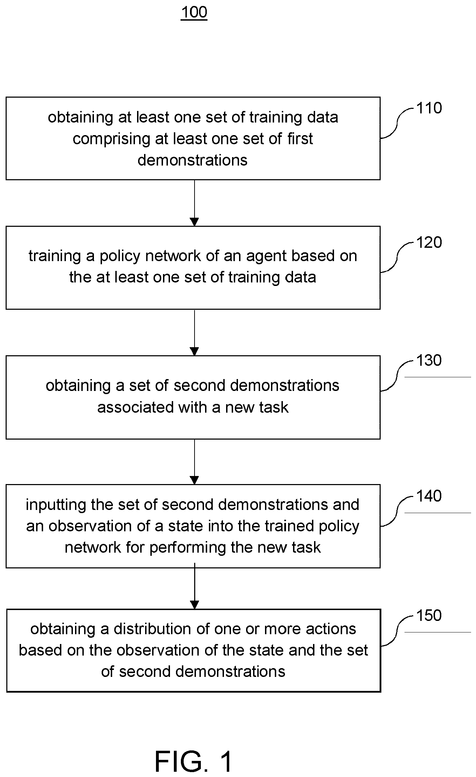

**Figure 1** is a process flow diagram of an exemplary method 100 for performing few-shot imitation in accordance with an embodiment.

At step 110, the method 100 comprises obtaining at least one set of training data, wherein each set of training data is associated with a task, e.g. a training task. Each set of training data comprises at least one of samples of rewards and a reward function, at least one of samples of state transitions and a transition distribution, and a set of first demonstrations. A demonstration of the set of first demonstrations may be a sequence of observations of a random length. An observation comprises at least one of a state-action pair, a state, a position, an image, and a sensor measurement.

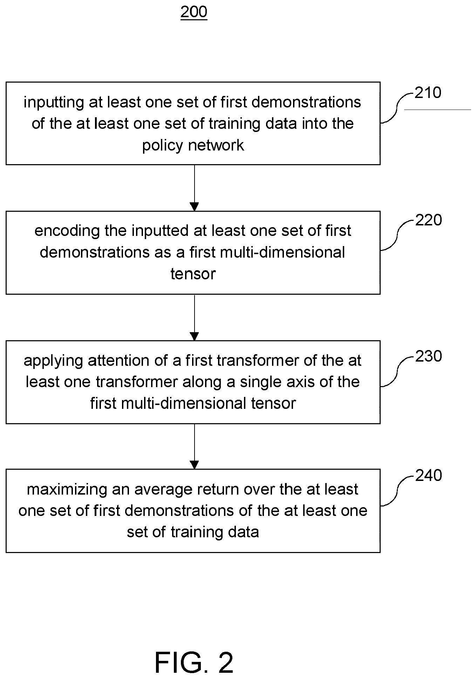

At step 120, the method 100 comprises training a policy network of an agent using reinforcement learning based on the at least one set of training data, e.g. based on a plurality of sets of training data. The training may be performed in accordance with the method of Figure 2 and comprise steps 210 to 240.

At step 130, a set of second demonstrations associated with a new task is obtained. The set of second demonstrations may be provided by a demonstrator. The new task may be related with tasks associated with the at least one set of training data. For example, the new task and the tasks associated with the at least one set of training data may have a similar optimal policy. The new task and at least one task associated with at least one set of training data may be different. Alternatively, the new task and all tasks associated with at least one set of training data may be different.

At step 140, the set of second demonstrations and an observation of a state of the agent is input into the trained policy network for performing the new task.

At step 150 a distribution of one or more actions is obtained by the trained policy network based on the observation of the state and the set of second demonstrations.

The steps 110 and 120 are performed during the training. The steps 130, 140, and 150 may be performed at inference time (at runtime of the agent).

**Figure 2** is a process flow diagram of an exemplary method 200 for training a policy network in accordance with an embodiment.

At step 210, at least one set of first demonstrations, e.g. a plurality of sets of first demonstrations, of the at least one set of training data are input or fed into the policy network. In addition, at least one of a state of the agent, a state-action pair, and an observation-action history are input into the policy network for training the policy network.

At step 220, the inputted at least one set of first demonstrations may be encoded or embedded as a first multi-dimensional tensor.

At step 230, attention of a first transformer of the at least one transformer may be applied along a single axis of the first multi-dimensional tensor.

At step 240, an average return is maximized over the at least one set of first demonstrations of the at least one set of training data based on reward functions of the training data or samples of rewards. Alternatively, a risk measure is maximized over the at least one set of first demonstrations of the at least one set of training data based on respective one or more reward functions or respective samples of rewards.

**Figure 3A** shows an example DCRL algorithm according to embodiments, which uses both expert demonstrations and environment interactions to train a policy network.

Tasks may be sampled from a distribution of tasks $\eta$. Each task $\mu \sim \eta$ is associated with a Markov decision process $M_\mu$ and a distribution over collections of demonstrations $D_\mu$. $\Delta(X)$ denotes a set of probability distributions over a set X. The Markov decision process $M_\mu := (S, A, \rho_\mu, P_\mu, R_\mu, \gamma)$ has a set of states S, a set of actions A, initial-state distribution $\rho_\mu, \in \Delta(S)$, transition distribution $P_\mu, : S \times A \to \Delta(S)$, random reward $R_\mu$, which is a mapping from $S \times A$ to the space of real-valued random variables, and a discount factor $\gamma \in [0, 1]$. $S := \cup_\mu S_\mu$ or $A := \cup_\mu A_\mu$ are defined if these sets depended on $\mu$. Both infinite-horizon settings are considered with $\gamma < 1$, and episodic settings with $\gamma \leq 1$, which are modeled by assuming that some states are absorbing and provide zero reward.

Let $H := \{(s_0, a_0, \ldots, a_{t-1}, s_t) : s_i \in S, i \leq t, a_j \in A, j < t, t \in \mathbb{Z}_{\geq 0}\}$ be the space of state-action histories, and let $\Pi = \{\pi : H \to \Delta(A)\}$ be the space of policies, which map such histories to distributions over actions.

Let the expected return of policy $\pi \in \Pi$ on task $\mu$ be $J_\mu(\pi) = \mathbb{E}_{\mu,\pi}[\sum_{t=0}^\infty \gamma^t R_\mu(s_t, a_t)],$ where $\mathbb{E}_{\mu,\pi}$ is the expectation over state-action sequences $(s_0, a_0, s_1, a_1, ...)$ sampled from $\rho_\mu$, $P_\mu$, and $\pi$. For each task $\mu$, it is assumed that the Markov decision process $M_\mu$ is such that $J_\mu(\cdot)$ exists for any policy, and that an optimal policy exists that maximizes $J_\mu(\cdot)$. Let $J_\mu^*$ be the expected return of such an optimal policy.

A demonstration is a sequence $d := (o_0, o_1, ..., o_{T-1})$ of observations $o_t \in \Omega$ of random length $T \in \mathbb{Z}_{\geq 0}$. Observations might be state-action pairs so that $\Omega \subseteq S \times A$, they might be states so that $\Omega \subseteq S$, or they might be images or some other sensor measurements that only provide partial information about the state. Such observations may come from a demonstrator. They need not be associated with the Markov decision process $M_\mu$. The set of all observation sequences of finite non-zero length may be denoted by $\Omega^+$, using the Kleene plus.

Collections of demonstrations of task $\mu$ are sampled from a distribution $D_\mu$. A collection of demonstrations $d :=$ $(d_0, ..., d_{n-1}) \sim D_\mu$ consists of a random number $n \in \mathbb{Z}_{\geq 0}$ of individual demonstrations. The set of collections of demonstrations may be denoted by $D := (\Omega^+)^+$.

A *few-shot imitation problem* is given by a distribution $\eta$ over tasks, and for each task $\mu$ a Markov decision process $M_\mu$ and a distribution $D_\mu$ over collections of demonstrations, as described above. The aim is to find an agent $\alpha : D \to \Pi$, which maps a collection of demonstrations $d \sim D_\mu$ of a task $\mu \sim \eta$ to a policy, so as to maximize the average return over tasks:

$$\max_{\alpha : D \to \Pi} \mathbb{E}_{\mu \sim \eta} \mathbb{E}_{d \sim D\mu} J_\mu(\alpha(d)).$$

It is customary to assume that a policy is given by a probability mass or density function over the actions A. Under this assumption, the above aim is equivalent to finding a *demonstration-conditioned policy* $\pi$ that assigns probability $\pi(a|h,d)$ to action a, given history h and demonstrations d, which maximizes

$$\mathbb{E}_{\mu \sim \eta} \mathbb{E}_{d \sim D\mu} \mathbb{E}_{\mu,\pi(\cdot|\cdot, d)} \left[ \sum_{t=0}^\infty \gamma^t R_\mu(s_t, a_t) \right] \qquad (1)$$

DCRL takes a simple and direct approach to the few-shot imitation problem. The input is a training set

$$X := \{(d^i, M_{\mu^i})\}_{i=0}^{N-1},$$

where each $d' \in D$ is a collection of demonstrations of a task $\mu^i$ and $M_\mu i$ is the Markov decision process for that task. A demonstration-conditioned policy $\pi$ or policy network is trained to maximize the empirical average cumulative reward

$$\frac{1}{N} \sum_{i=0}^{N-1} J_{\mu^i}(\pi(\cdot \mid \cdot, d^i)).$$

To approximately maximize this objective, a reinforcement learning (RL) algorithm in which the demonstration are appended can be used to the state in the replay buffer, as shown in Algorithm 1.

**Algorithm 1: Demonstration-conditioned reinforcement learning**

---

1: **Input**: Training set $X := \{(d^i, M_{\mu^i})\}_{i=0}^{N-1}$, trainable parameters θ

2: Buffer ← ∅

3: **while** not converged **do**

4:     i ∼ Uniform({0, . . . , N - 1})

5:     $s_0$, done ← InitEnvironment($M_{\mu^i}$)

6:     **for** t = 0, 1, . . . **until** done **do**

7:        $a_t \sim \pi_\theta(\cdot\,|h_t, d^i)$ where $h_t = (s_0, a_0, \ldots, s_t)$

8:        $R_t, s_{t+1}$ , done ← EnvironmentStep($M_{\mu^i}, s_t, a_t$)

9:        Buffer ← Buffer ∪ $\{(R_t, h_{t+1}, done, d^i)\}$

10:     **end for**

11:     **if** it is time for an update **then**

12:        θ ← UpdatePolicy(Buffer, θ)

13:     **end if**

14: **end while**

15: **return** $\pi_\theta$

DCRL may produce policies that generalize to new tasks μ which are not present in the training set. For there to exist a policy that attains a high value for the objective of the few-shot imitation problem, the demonstrations carry sufficient information about the nature of the task at hand. For instance, one might consider few-shot imitation problems that are *separable* in the sense that there exists a mapping $\alpha : D \to \Pi$ that attains the upper bound $\mathbb{E}_{\mu \sim \eta} J^*_\mu$ on the objective.

Demonstration-conditioned policies may have a specific structure $\pi(a|h, d) = F(a, h, \Phi(d))$, where $\Phi : D \to \varepsilon$ maps a collection of demonstrations to an embedding space $\varepsilon$, and $F$ maps histories and embeddings to action probabilities.

One might think of the embedding function $\Phi$ as a classifier that maps demonstrations to task identities, and $F$ as a policy for each identified task. However, different tasks may have identical optimal policies and are not always distinguishable based on demonstrations. In such situations, even if a perfect classifier mapping demonstrations to task identities does not exist, it is sometimes still possible to attain the upper bound

$$\mathbb{E}_{\mu \sim \eta}\, \mathbb{E}_{d \sim D\mu} J_\mu(F(\cdot\,|\,\cdot, \Phi(d))) = \mathbb{E}_{\mu \sim \eta} J^*_\mu$$

on the objective (1). Two collections of demonstrations are close (in some sense) under $\phi$ if they have similar optimal policies, and generalization to new tasks is achieved by interpolating in this embedding space.

In embodiments, policies with *cross-demonstration attention* are disclosed, which accept a variable number of demonstrations as input, and which process demonstrations simultaneously, enabling a richer integration of information than is possible by averaging. This advantage is particularly clear in the experiments on navigation.

While the results of transformer-based policies are impressive, their computational and memory complexities grow quadratically with the size of their input. This becomes prohibitive when the input consists of multiple demonstrations, each of which is a multivariate time series. To overcome this cost, transformers with *axial attention* can be used. Axial attention is one of several techniques to improve the efficiency of transformers.

Rather than applying attention to a flattened string of tensor elements, DCLR instead applies attention along a single axis of the tensor without flattening, which may be referred to as "axial attention." Axial Transformer represents a self-attention-based autoregressive model for images and other data organized as high/multi-dimensional tensors.

Axial Transformer does not change the original shape of the multidimensional data tensor and are configured to perform a masked or unmasked attention over a single axis of the tensor at a time. This operation can be called axial attention, denoted by Attention k(x). It performs attention over axis k of the tensor x, mixing information along axis k while keeping information along other axes independent.

**Figure 3B** shows a simplified view of the proposed DCRL policy architecture according to an embodiment. The model takes a collection of demonstrations and the agent's history as input, and outputs the action distribution (policy head) and estimated value function (value head).

The policy network comprises an encoder and a decoder. The encoder maps a collection of demonstrations to an embedding. The decoder treats this embedding as context and maps the agent's history to an action and a value function.

In more detail, a collection of demonstrations d may be represented as an array of size $T \times n \times d_{obs}$, where T is the maximum length of the demonstrations, n is the number of demonstrations, and $d_{obs}$ is the dimension of the observations. Demonstrations shorter than T may be masked, and each observation may be mapped to a latent space of dimension H. As multi-head self-attention is equivariant to permutations of its input, 2D positional encoding can be added to the demonstrations. The result is passed through a sequence of L encoder layers, each encoder layer having distinct trainable parameters, but an identical architecture. The output of each encoder layer is of size $T \times n \times H$. This output can be averaged over its demonstration dimension, to get an embedding $e$ of size $T \times H$.

Next we process the agent's history $h_t$.

Each element of the agent's history $h_t$ may be mapped to a latent space of dimension H, and 1D positional encoding may be added. The resulting array of size $T' \times H$, where T' is the length of the history, is fed through a sequence of L decoder layers. Each decoder layer has an architecture comprising of multi-head self-attention, multi-head cross-attention using embedding e, and a feedforward network, each surrounded by a residual connection and followed by layer normalization. The output of the last decoder layer is fed to a multi-layer perceptron, giving a distribution from which we sample an action $a_t$. Optionally, depending on the RL algorithm, the output is also fed to a second multi-layer perceptron, giving an estimate of the state-value function $V_t$.

Each encoder layer may comprise a temporal layer, followed by a cross-demonstration layer, and then a pointwise feedforward network. Each of these layers is surrounded by a residual connection and followed by layer normalization. For input $X \in \mathbb{R}^{T \times n \times H}$, the temporal layer has output $Y \in \mathbb{R}^{T \times n \times H}$ with elements

$$Y_{tik} = \mathrm{MultiHeadSelfAttention}(X^{(0,i)})_{tk},$$

where each $X^{(0,i)} \in \mathbb{R}^{T \times H}$ is the matrix with elements $X_{tk}^{(0,i)} = X_{tik}$. The cross-demonstration layer has output $Y \in \mathbb{R}^{T \times n \times H}$ with elements

$$Y_{tik} = \mathrm{MultiHeadSelfAttention}(X^{(1,t)})_{tk},$$

where each $X^{(1,t)} \in \mathbb{R}^{T \times H}$ has elements $X_{tk}^{(1,t)} = X_{tik}$.

For inputs in $\mathbb{R}^{T \times n \times H}$, the computation and (backpropagation) memory complexities of a conventional encoder are both $O(T^2 n^2)$, considering H as well as the number of heads and layers to be fixed, whereas with axial attention, these complexities are reduced to $O(Tn(T + n))$. This saves GPU memory while training.

In the following, DCRL is compared to two *demonstration-conditioned behavioral cloning* (DCBC) methods. Each uses the same model architecture as DCRL (the MLP value head in Figure 3B is simply ignored), but is trained to minimize a BC loss. For continuous actions, the BC loss is the squared error in the mean action output of the policy MLP, and for discrete actions, it is the cross-entropy loss.

*DCBC+MT (Multi-Task).* This baseline minimizes the BC loss for predicting actions in the training demonstrations.

*DCBC+REPTILE.* This baseline uses Reptile coupled with BC loss to meta-train the model. Reptile is a meta-learning algorithm that yields similar performance to MAML, while being less computationally expensive.

For the training protocol, 5000 demonstrations of each task are sampled. To do so, one policy per task is trained with PPO (Schulman, J., Wolski, F., Dhariwal, P., Radford, A., and Klimov, O. Proximal policy optimization algorithms, arXiv preprint arXiv:1707.06347 2017), until each policy has at least a 99% success rate according to a task-specific success criterion. Then successful trajectories from these policies are sampled. DCRL and the two baselines are trained using demonstrations sampled uniformly from this collection, and the number of such demonstrations is sampled uniformly from {1, ... , 4}.

DCRL is trained as shown in Algorithm 1, using PPO in line 12. PPO is simple, provides relatively short training times, and a high quality of the resulting policies. Most other RL algorithms could be used instead. It takes about one day to train DCRL for both benchmarks, using a Tesla V100 GPU. Training requires about 250 million environment frames. The model has about $5.5 \times 10^5$ learnable parameters.

The methods are evaluated on tasks not present in the dataset. To evaluate a policy for a single task, the policy is applied for 300 episodes, with randomly sampled demonstrations and initial conditions for each episode.

The performance is assessed by using Meta-World, a robotic manipulation benchmark, originally designed to assess the performance of meta-learning algorithms (Yu, T., Quillen, D., He, Z., Julian, R., Hausman, K., Finn, C., and Levine, S. Meta-World: A benchmark and evaluation for multi-task and meta reinforcement learning. In Conference on Robot Learning, CoRL, 2019b). The reward function specified in that paper sometimes makes it preferable for agents to stay in regions of high reward, than to successfully complete a task. However, for DCRL, a modified reward, which acts like the time derivative of the original reward, can be used.

Table 1 shows a return and success rate of DCRL and DCBC+MT averaged over all Meta-World tasks, for one or five input demonstrations.

| # Demonstrations | Return | | Success Rate | |
|---|---|---|---|---|
| | 1 | 5 | 1 | 5 |
| DCRL | 296.34 | 289.21 | 48% | 48% |
| DCBC+MT | 109.25 | 120.42 | 17% | 24% |

Table 1 compares the discounted return and success rate of DCRL with those of DCBC+MT, on the task of few-shot imitation, with no fine-tuning. DCRL significantly improves on the baseline, although its performance does not increase when more demonstrations are provided.

DCRL can be fine-tuned effectively on new tasks, assuming that actions of a demonstrator are available in the demonstrations. Fine-tuning DCRL with behavior cloning only takes a few seconds for each task.

DCRL attains a 90% success rate over all Meta-World tasks, after fine-tuning on only four demonstrations. This is a large improvement on the success rates of RL[2], PEARL, and MAML.

DCBC+REPTILE gives a better initialization point than DCBC+MT, although this advantage decreases with the number of demonstrations. Meanwhile, DCRL gives the best initialization point. DCRL can interact with the environment during training, and thus overcome the compounding errors that plague BC-based methods.

To assess the robustness of DCRL to a domain shift between the demonstrator and the agent, demonstrations are collected using PPO policies for a LIMS2-AMBIDEX robot (Kim, Y. Design of low inertia manipulator with high stiffness and strength using tension amplifying mechanisms. IEEE/RSJ International Conference on Intelligent Robots and Systems, IROS, pp. 5850-5856, 2015.), rather than the Sawyer robot used in the original Meta-World benchmark. The AMBIDEX manipulator has seven degrees of freedom like the Sawyer, but its observations are in $\mathbb{R}^{18}$ as they contain information about the gripper orientation, and it has a different mechanical structure.

Table 2 presents the average return and success rate for DCRL with no domain shift (trained and tested with Sawyer demonstrations and Sawyer environment), and for DCRL with domain shift (trained and tested with AMBIDEX demonstrations and Sawyer environment). The results for the two settings are similar, suggesting that DCRL can indeed cope with a domain shift.

Table 2. Retum and success rate of DCRL averaged over 43 Meta-World tasks, using demonstrations from Sawyer (top row) or from AMBIDEX (bottom row) as input.

| # Demonstrations | Return | | Success Rate | |
|---|---|---|---|---|
| | 1 | 5 | 1 | 5 |
| DCRL | 315.90 | 322.69 | 51% | 51% |
| DCRL (AMBIDEX) | 308.42 | 328.70 | 45% | 48% |

To explore if DCRL can outperform a suboptimal demonstrator when presented with a new task, demonstrations are sampled by adding noise to the actions taken by task-specific expert PPO policies. Zero-mean Gaussian noise with covariance $\sigma^2 I_{4\times4}$ is added, where the standard deviation $\sigma$ is an adjustable parameter.

Experiments have shown that the experts still outperform DCRL for $\sigma \leq 2$. However, for $\sigma > 2$, DCRL is more successful than the task-specific demonstrator, even though it has never encountered the task before.

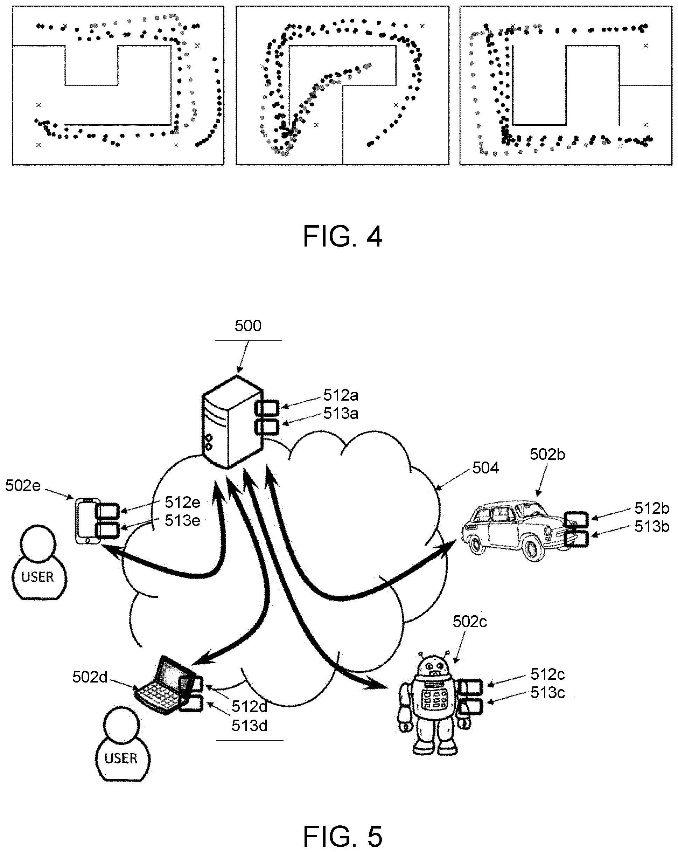

A second benchmark involves 60 tasks, each corresponding to a maze layout. As shown in **Figure 4,** the agent must navigate between a given pair of positions. The main motivation for introducing this benchmark is to challenge agents' abilities to integrate information across demonstrations, to a greater extent than the Meta-World benchmark. As no information in an agent's observation specifies the current layout, the agents must use the demonstrations to learn about the layout in order to reach its goal point efficiently without hitting walls. **Figure 4** shows three examples of navigation tasks. Crosses are goals, dots are demonstrations and stars are a DCRL agent's history.

In each task, observations are in $\mathbb{R}^7$ (agent and goal positions, agent velocity and orientation), there are four actions (forward, backward, turn left and turn right), the reward is minus the Euclidean distance between the agent and the goal with a bonus for reaching the goal and a penalty for hitting walls, the transition function is computed with ViZDoom (Kempka, M., Wydmuch, M., Rune, G., Toczek, J., and Ja'skowski, W. ViZDoom: A Doom-based AI research platform for visual reinforcement learning. In IEEE Conference on Computational Intelligence and Games, CIG, pp. 1-8, 2016), and the initial position of the agent and the goal are sampled uniformly.

In all experiments on this benchmark, DCRL is trained on a fixed set of 50 mazes and tested on the remaining 10 mazes.

Table 3 compares the performance of DCRL with DCBC+MT, for few-shot imitation with no fine-tuning. As in the analogous results for Meta-World (Table 1), DCRL significantly improves on the baseline, but in contrast to those analogous results, DCRL's performance increases as more demonstrations are provided. One explanation for this increase may be that different demonstrations often cover different parts of the maze, so some pairs of initial and goal positions may only be addressed by integrating information from different demonstrations.

**Table 3.** Return and success rate averaged over the 10 test mazes using one or five demonstrations as input.

| # Demonstrations | Return | | Success Rate | |
|---|---|---|---|---|
| | 1 | 5 | 1 | 5 |
| DCRL | 61.79 | 74.17 | 77% | 85% |
| DCBC+MT | 17.52 | 17.87 | 68% | 68% |

Fine-tuning provides smaller performance improvements for this benchmark than the analogous results for Meta-World.

To understand the benefit of cross-demonstration attention, DCRL using five demonstrations as input is compared to an algorithm in which each of these five demonstrations to DCRL are fed one at a time, and then the resulting action probabilities are averaged. Cross-demonstration attention has a consistent advantage for all 10 test mazes, in line with the expectation that attending to multiple demonstrations should help when one demonstration does not fully resolve ambiguity in the objective.

While some specific embodiments have been described in detail above, it will be apparent to those skilled in the art that various modifications, variations, and improvements of the embodiments may be made in light of the above teachings and within the content of the appended claims without departing from the intended scope of the embodiments. In addition, those areas in which it is believed that those of ordinary skill in the art are familiar have not been described herein in order to not unnecessarily obscure the embodiments described herein. Accordingly, it is to be understood that the embodiments are not to be limited by the specific illustrative embodiments, but only by the scope of the appended claims.

Although the above embodiments have been described in the context of method steps, they also represent a description of a corresponding component, module or feature of a corresponding apparatus or system.

Some or all of the method steps may be implemented by a computer in that they are executed by (or using) a processor, a microprocessor, an electronic circuit or processing circuitry.

The embodiments described above may be implemented in hardware or in software. The implementation can be performed using a non-transitory storage medium such as a computer-readable storage medium, for example a floppy disc, a DVD, a Blu-Ray, a CD, a ROM, a PROM, and EPROM, an EEPROM or a FLASH memory. Such computer-readable media can be any available media that can be accessed by a general-purpose or special-purpose computer system.

Generally, embodiments can be implemented as a computer program product with a program code or computer-executable instructions, the program code or computer-executable instructions being operative for performing one of the methods when the computer program product runs on a computer. The program code or the computer-executable instructions may be stored on a computer-readable storage medium.

In an embodiment, a storage medium (or a data carrier, or a computer-readable medium) comprises, stored thereon, the computer program or the computer-executable instructions for performing one of the methods described herein when it is performed by a processor. In a further embodiment, an apparatus comprises one or more processors and the storage medium mentioned above.

In a further embodiment, an apparatus comprises means, for example processing circuitry like, e.g., a processor communicating with a memory, the means being configured to, or adapted to perform one of the methods described herein.

A further embodiment comprises a computer having installed thereon the computer program or instructions for performing one of the methods described herein.

The above-mentioned methods and embodiments may be implemented within an architecture such as illustrated in **Figure 5,** which comprises server 500 and one or more client devices 502 that communicate over a network 504 (which may be wireless and / or wired) such as the Internet for data exchange. Server 500 and the client devices 502 include a data processor 512 and memory 513 such as a hard disk. The client devices 502 may be any device that communicates with server 500, including autonomous vehicle 502b, robot 502c, computer 502d, or cell phone 502e.

More precisely, in an embodiment, the method according to the embodiment of **Figure 1** and/or **Figure 2** may be performed at server 500 and/or or at autonomous vehicle 502b and/or robot 502c. In other embodiments, the methods according to the embodiments of **Figure 1** and/or **Figure 2** may be performed at client device 502 partially or completely. In yet other embodiments, the methods may be performed at a different server or on a plurality of servers in a distributed manner.

The aim of few-shot imitation is to reduce the number of demonstrations required to learn to perform new tasks. A novel method called demonstration-conditioned reinforcement learning (DCRL) for performing few-shot imitation is disclosed. While DCRL requires the specification of reward functions for training, it can be shown that this extra cost can be outweighed by a reduction in the number of demonstrations required at inference time and an improved success rate on new tasks, relative to other recent few-shot imitation methods. Moreover, results on robotic manipulation and navigation benchmarks show that DCRL can improve on suboptimal demonstrators and succeed even when there is a domain shift between the agent and demonstrator.

**Claims**

1. An agent comprising a pre-trained policy network for performing at least one task, wherein the agent is configured to:

    obtain a set of first demonstrations and an observation as input for the pre-trained policy network;
    input the set of first demonstrations and the observation into the pre-trained policy network for performing a task associated with the first demonstrations; and
    determine, by the pre-trained policy network, at least one action to be performed based on the inputted set of first demonstrations and the inputted observation,
    wherein the pre-trained policy network is trained using reinforcement learning.

2. The agent of claim 1, wherein the agent is configured to perform the determined at least one action comprising at least one of controlling a robot or a part of the robot, controlling a machine, controlling a vehicle, and manipulating a state of an environment.

3. The agent of one of claims 1 and 2, wherein the pre-trained policy network comprises a pre-trained transformer-based policy network, and wherein the pre-trained transformer-based policy network comprises at least one transformer with axial attention, and/or wherein the pre-trained policy network comprises at least one of a first self-attention mechanism for processing the set of first demonstrations, a second self-attention mechanism for the observation and a cross-attention mechanism for processing the set of first demonstrations and the observation.

4. The agent of one of claims 1 to 3, wherein a demonstration of the set of first demonstrations is a sequence of observations of a random length,
    wherein the observation comprises at least one of a state-action pair, a state, a position, an image and a sensor measurement, and/or
    wherein the set of first demonstrations is provided by a demonstrator.

5. A robot comprising the agent of one of claims 1 to 4, wherein the task comprises a manipulation task for manipulating an object, and wherein the observation comprises information about the robot or one or more parts of the robot, wherein the set of first demonstrations comprise a sequence of positions and/or orientations of the robot or the one or more parts of the robot, and wherein at least one actuator of the robot is controlled based on the determined action to be performed to modify a state of an environment, or

wherein the task comprises a navigation task for navigating the robot or a part of the robot, and wherein the observation comprises a position of the robot or the part of the robot, wherein the set of first demonstrations comprise a sequence of positions of the robot or the part of the robot, and wherein at least one actuator of the robot is controlled based on the determined action to be performed.

6. A computer-implemented method for performing few-shot imitation, wherein the computer-implemented method comprises:

   obtaining at least one set of training data, wherein each set of training data is associated with a task and comprises (i) at least one of samples of rewards and a reward function, (ii) at least one of samples of state transitions and a transition distribution, and (iii) a set of first demonstrations;
   training a policy network of an agent using reinforcement learning by inputting at least one set of first demonstrations of the at least one set of training data into the policy network, and by maximizing a risk measure or an average return over the at least one set of first demonstrations of the at least one set of training data based on respective one or more reward functions or respective samples of rewards;
   obtaining a set of second demonstrations associated with a new task; and
   inputting the set of second demonstrations and an observation of a state into the trained policy network for performing the new task.

7. The computer-implemented method of claim 6, wherein the policy network comprises a transformer-based policy network, and/or
   wherein the policy network comprises at least one of a first self-attention mechanism for processing the set of second demonstrations, a second self-attention mechanism for processing the observation of the state and a cross-attention mechanism for processing the set of second demonstrations and the observation of the state.

8. The computer-implemented method of claim 7, wherein the transformer-based policy network comprises at least one transformer with axial attention.

9. The computer-implemented method of claim 8, wherein the inputted at least one set of first demonstrations are encoded as a first multi-dimensional tensor and attention of a first transformer of the at least one transformer is applied along a single axis of the first multi-dimensional tensor, and/or
   wherein the inputted set of second demonstrations are encoded as a second multi-dimensional tensor and attention of a second transformer of the at least one transformer is applied along a single axis of the second multi-dimensional tensor.

10. The computer-implemented method of one of claims 6 to 9, wherein the steps of obtaining a set of second demonstrations associated with a new task, and inputting the set of second demonstrations and an observation of a state into the trained policy network for performing the new task are performed at inference time, and/or
    wherein the steps of obtaining at least one set of training data, and training a policy network using reinforcement learning are performed during training time.

11. The computer-implemented method of one of claims 6 to 10, wherein the step of inputting the at least one set of first demonstrations of the at least one set of training data into the policy network for training the policy network comprises inputting at least one of a state of the agent, a state-action pair, and an observation-action history into the policy network for training the policy network.

12. The computer-implemented method of one of claims 6 to 11, wherein the at least one set of first demonstrations of the at least one set of training data comprise demonstrations of at least two tasks, and
    wherein maximizing the average return over the at least one set of first demonstrations of the at least one set of training data comprises maximizing an average cumulative reward over the at least two tasks.

13. The computer-implemented method of one of claims 6 to 12, further comprising obtaining, by the trained policy network, a distribution of one or more actions based on the observation of the state and the set of second demonstrations.

**14.** The computer-implemented method of one of claims 6 to 13, wherein the new task and at least one task associated with at least one set of training data are different, or wherein the new task and all tasks associated with at least one set of training data are different.

**15.** A computer-readable storage medium comprising instructions which, when executed by a computer, cause the computer to carry out the method of one of claims 6 to 14.

<u>100</u>

obtaining at least one set of training data comprising at least one set of first demonstrations — 110

↓

training a policy network of an agent based on the at least one set of training data — 120

↓

obtaining a set of second demonstrations associated with a new task — 130

↓

inputting the set of second demonstrations and an observation of a state into the trained policy network for performing the new task — 140

↓

obtaining a distribution of one or more actions based on the observation of the state and the set of second demonstrations — 150

# FIG. 1

200

inputting at least one set of first demonstrations of the at least one set of training data into the policy network

210

encoding the inputted at least one set of first demonstrations as a first multi-dimensional tensor

220

applying attention of a first transformer of the at least one transformer along a single axis of the first multi-dimensional tensor

230

maximizing an average return over the at least one set of first demonstrations of the at least one set of training data

240

FIG. 2

Parallel data collection

Update

$\mathbf{d}^i \sim \mathcal{D}_\mu$

Policy $\pi_\theta$

Multi-task
demonstration
data

$a$ $o$ $R_\mu$

Multi-task
environment

Task $\mu \sim \eta$

$a$ $o$
$R_\mu$ $\mathbf{d}^i$

Buffer

Batch

Update $\theta$

$\theta$

## FIG. 3A

$e = \Phi(\mathbf{d}) \in \mathcal{E}$

$a_t \in \mathcal{A}$

$V_t \in \mathbb{R}$

Average pooling

MLP policy
head

MLP value
head

$L \times$

Cross-demonstration
encoder layer

Temporal decoder layer

Temporal encoder layer

2D positional
encoding

1D positional
encoding

Input embedding

Input embedding

$\mathbf{d} := (d_0, \ldots, d_{n-1}) \sim \mathcal{D}_\mu$

$h_t \in \mathcal{H}$

## FIG. 3B

FIG. 4

FIG. 5

Europäisches
Patentamt

European
Patent Office

Office européen
des brevets

# EUROPEAN SEARCH REPORT

Application Number

EP 21 30 5799

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUDEEP DASARI ET AL: "Transformers for One-Shot Visual Imitation", ARXIV.ORG, CORNELL UNIVERSITY LIBRARY, 201 OLIN LIBRARY CORNELL UNIVERSITY ITHACA, NY 14853, 11 November 2020 (2020-11-11), XP081811772, * the whole document * | 1-15 | INV. G06N3/00 G06N7/00 G06N3/08 G06N3/04 B25J9/16 |
| X | JONATHAN HO ET AL: "Axial Attention in Multidimensional Transformers", ARXIV.ORG, CORNELL UNIVERSITY LIBRARY, 201 OLIN LIBRARY CORNELL UNIVERSITY ITHACA, NY 14853, 20 December 2019 (2019-12-20), XP081566721, | 1,6,15 | |
| A | * the whole document * | 2-5,7-14 | |
| X | Cachet Théo ET AL: "Transformer-based Meta-Imitation Learning for Robotic Manipulation", 3rd Workshop on Robot Learning, Thirty-fourth Conference on Neural Information Processing Systems (NeurIPS), virtual only conference, 6-12 December, 2020, 6 December 2020 (2020-12-06), XP055871807, Retrieved from the Internet: URL:http://www.robot-learning.ml/2020/file s/C7.pdf [retrieved on 2021-12-10] | 1,6,15 | TECHNICAL FIELDS SEARCHED (IPC) G06N B25J |
| A | * the whole document * | 2-5,7-14 | |

The present search report has been drawn up for all claims

| Place of search | Date of completion of the search | Examiner |
|---|---|---|
| Munich | 16 December 2021 | Cyranka, Oliver |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FINN, C. ; YU, T. ; ZHANG, T. ; ABBEEL, P. ; LEVINE, S.** *One-shot visual imitation learning via meta-learning,* 2017
- **GOO, W. ; NIEKUM, S.** One-shot learning of multistep tasks from observation via activity localization in auxiliary video. *In International Conference on Robotics and Automation, ICRA,* 2019, 7755-7761
- **SCHULMAN, J. ; WOLSKI, F. ; DHARIWAL, P. ; RADFORD, A. ; KLIMOV, O.** *Proximal policy optimization algorithms,* 2017
- **YU, T. ; QUILLEN, D. ; HE, Z. ; JULIAN, R. ; HAUSMAN, K. ; FINN, C. ; LEVINE, S.** Meta-World: A benchmark and evaluation for multi-task and meta reinforcement learning. *In Conference on Robot Learning, CoRL,* 2019

- **KIM, Y.** Design of low inertia manipulator with high stiffness and strength using tension amplifying mechanisms. *IEEE/RSJ International Conference on Intelligent Robots and Systems, IROS,* 2015, 5850-5856
- **KEMPKA, M. ; WYDMUCH, M. ; RUNE, G. ; TOCZEK, J. ; JA'SKOWSKI, W.** ViZDoom: A Doom-based AI research platform for visual reinforcement learning. *In IEEE Conference on Computational Intelligence and Games, CIG,* 2016, 1-8